# EUROPEAN PATENT APPLICATION

(11) **EP 4 538 570 A1**
(43) Date of publication of application: **16.04.2025**
(21) Application number: 23819195.1
(22) Date of filing: 08.06.2023
(51) Int. Cl.: F16K 31/04, F16K 1/36

(54) **VALVE DEVICE AND MANUFACTURING METHOD**

(30) Priority: 10.06.2022 CN 202210657084
(71) Applicant: ZHEJIANG SANHUA AUTOMOTIVE COMPONENTS CO., LTD., Hangzhou, Zhejiang 310018 (CN)
(72) Inventor: CHEN, Rongbin, Hangzhou, Zhejiang 310018 (CN); PAN, Yiyuan, Hangzhou, Zhejiang 310018 (CN)
(74) Representative: Maikowski & Ninnemann Patentanwälte Partnerschaft mbB
(86) International application number: PCT/CN2023/099022
(87) International publication number: WO 2023/237031

(57) **Abstract**

A valve device and a manufacturing method. The valve device comprises a valve seat component; the material of the valve seat component comprises a metal; the valve seat component is machined and formed by means of a drawing process; the valve seat component comprises a connecting part and a valve seat part; the connecting part and the valve seat part are of an integrated structure. By means of such configuration, compared with the manner in which the connecting part and the valve seat part are respectively cut, machined and formed by machining by using metal material blocks, machining consumables and machining energy consumption of the valve seat component can be reduced.

## Description

The present application claims priority to the Chinese Patent Application No. 202210657084.0, titled "VALVE DEVICE AND MANUFACTURING METHOD", filed on June 10, 2022 with the China National Intellectual Property Administration, which is incorporated herein by reference in its entirety.

### FIELD

The present application relates to the technical field of fluid control, and in particular to a valve device and a manufacturing method.

### BACKGROUND

A valve device includes a connecting portion and a valve seat part, and a valve port is formed in the valve seat part. The connecting portion and the valve seat part are formed separately and then fixed together. The connecting portion and the valve seat part are machined from metal blocks and cut into shapes, respectively, which results in material waste and increases energy consumption for processing.

### SUMMARY

An object of the present application is to provide a valve device and a manufacturing method, which is beneficial to reducing consumables and energy consumption for machining the valve device.

In order to achieve the object above, the technical solutions are provided in the present application as follows.

A valve device includes a valve seat component and a valve core assembly. The valve seat component is made of material containing metal and formed by a stretching process, and the valve seat component includes a connecting portion and a valve seat portion that are integrally formed, the valve seat portion includes a valve port portion with a valve port; and the valve core assembly includes a valve core portion, which is movable relative to the valve port to adjust a flow area of the valve port.

A manufacturing method for manufacturing the valve device includes:
obtaining a base material for valve seat component;
forming a main body of valve seat component by a stretching process; and
forming a valve port portion by a cutting process.

In an embodiment according to the present application, the valve seat component is made of material containing metal and formed by a stretching process, the valve seat component includes the connecting portion and the valve seat portion that are integrally formed. With such arrangement, compared with the case that the connecting portion and the valve seat portion are separately machined by metal blocks and cut to pieces, it is beneficial to reducing the energy consumption and consumables for machining the valve seat component.

### BRIEF DESCRIPTION OF THE DRAWINGS

FIG. 1 is a schematic front structural view of an electric valve according to an embodiment of the present application;
FIG. 2 is a schematic cross-sectional structural view of the electric valve along line A-A in FIG. 1;
FIG. 3 is a schematic front structural view of a valve component in FIG. 2;
FIG. 4 is a schematic cross-sectional structural view of the valve component along line B-B in FIG. 3;
FIG. 5 is a schematic cross-sectional structural view of a valve seat component from one perspective;
FIG. 6 is a schematic cross-sectional structural view of a coil assembly in FIG. 2 from one perspective;
FIG. 7 is a schematic cross-sectional structural view of the coil assembly in FIG. 6 according to another embodiment from one perspective;
FIG. 8 is a schematic perspective structural view of a nut assembly in FIG. 2 from one perspective;
FIG. 9 is a schematic front structural view of the nut assembly in FIG. 8;
FIG. 10 is a schematic cross-sectional structural view of the nut assembly along line C-C in FIG. 9;
FIG. 11 is a schematic enlarged view of a portion A in FIG. 2;
FIG. 12 is a schematic enlarged view of the portion A in the electric valve in FIG. 2 according another embodiment;
FIG. 13 is a schematic front structural view of a valve core assembly in FIG. 2;
FIG. 14 is a schematic cross-sectional structural view of the valve core assembly along line D-D in FIG. 14; and
FIG. 15 is a schematic perspective structural view of a rotor assembly in FIG. 2 from one perspective.

### DETAILED DESCRIPTION OF THE EMBODIMENTS

Hereinafter, the present application will be further described in conjunction with the accompanying drawings and specific embodiments.

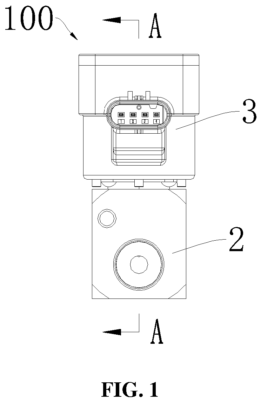

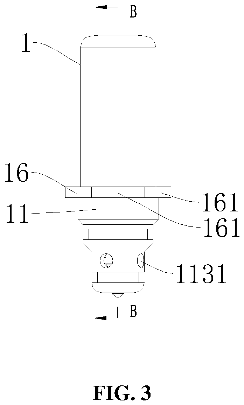

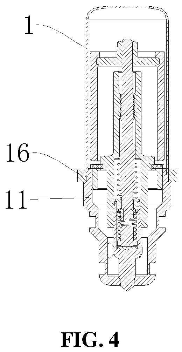

Referring to FIG. 1 to FIG. 4, an electric valve according to a first embodiment is illustrated. In the present application, the valve device includes a type of electric valve 100, which includes an electric expansion valve. The following will be described specifically based on the electric valve 100. The electric valve 100 includes a valve component 1, a valve body 2, and a coil assembly 3. In this embodiment, the valve component 1 is fixedly connected to the valve body 2, and the coil assembly 3 is fixedly connected to the valve body 2. The valve body 2 is provided with a valve chamber 21, and at least a part of the valve component 1 is located inside the valve chamber 21. Of course, in other embodiments, the coil assembly 3 may be fixedly connected to the valve component 1, and then the assembled coil assembly 3 and the valve component 1 are fixedly connected to the valve body 2. The coil assembly 3 includes a stator assembly 31 and an injection molding portion 32. The injection molding portion 32 covers at least a part of the stator assembly 31 through injection molding. The coil assembly 3 is provided with an accommodation chamber 33, and at least a part of the valve component 1 is located inside the accommodation chamber 33. The valve component 1 includes a valve seat component 11, a rotor assembly 12, a valve core assembly 13, a nut assembly 14, and a sleeve 15. The valve core assembly 13 is connected to the rotor assembly 12, and at least part of the sleeve 15 is located inside the accommodation chamber 33. The sleeve 15 includes a sleeve top 151 and a lower end opening 152. The lower end opening 152 of the sleeve 15 is fixed to the valve seat component 11 by welding and sealed with the valve seat component 11. The stator assembly 31 is located outside the sleeve 15, and the rotor assembly 12 is located inside the sleeve 15. A preset current is applied to the stator assembly 31, which can generate an excitation magnetic field to drive the rotor assembly 12 to rotate. Then, the rotor assembly 12 drives the valve core assembly 13 to rotate, and the valve core assembly 13 is threadedly connected with the nut assembly 14 to convert the rotation of the rotor assembly 12 into an axial motion of the valve core assembly 13 relative to the valve seat component 11.

In this embodiment, the valve body 2 is formed independently. Of course, in other embodiments, the valve body 2 may also be formed as a part of other components, for example, as a part of a connecting plate of an integrated assembly or a part of a heat-exchange assembly.

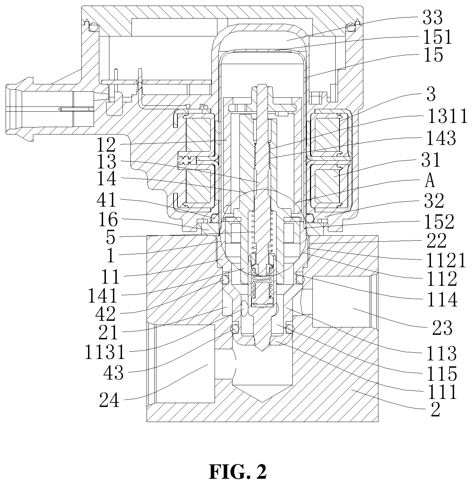

Referring to FIG. 2, in this embodiment, an axial direction or an axial direction of the electric valve refers to an extension direction of the valve core assembly 13 or a direction paralleling to the extension direction of the valve core assembly 13. Comparatively, a radial direction of the electric valve 100 is perpendicular to the axial direction of the electric valve 100. Of course, due to inevitable errors in the design process, the expression "paralleling to" herein includes "approximately paralleling to", which is not necessary to "absolutely paralleling to". Referring to FIG. 2, it defines that the coil assembly 3 is located above the valve body 2 in the axial direction of the electric valve. In the present application, the expressions "above" and "below" merely represent relative positions.

Referring to FIG. 2 to FIG. 5, in this embodiment, the valve seat component 11 is made of material containing metal. The valve seat component 11 is formed by a stretching process. The process of forming the valve seat component 11 through stretching process can be understood that, after the main body of the valve seat component 11 is formed by a stretching process, and a portion of step, chamfer, groove, or through hole can be further machined through cutting process, or the processes can be reversed. The valve seat component 11 includes a valve seat portion 111 and a connecting portion 112. The connecting portion 112 and the valve seat portion 111 are integrally formed. The valve seat portion 111 includes a valve port portion 1111, which has a valve port 1112. The electric valve 100 includes a valve core assembly 13, and the rotor assembly 12 can drive the valve core assembly 13 to move relative to the valve port 1112, that is, a valve core portion 133 of the valve core assembly 13 can move relative to the valve port 1112 to adjust a flow area of the valve port 1112. In this embodiment, the valve seat component 11 is made of stainless steel, but may also be other similar metal materials. The stretching forming process includes metal stretching processes such as stretching and stamping, in other words, the stretching forming process includes metal stretching processings such as stretching and stamping. In this embodiment, the base material of the valve seat component 11 may be a sleeve made of stainless steel, which is processed through stretching process to form the main body of the valve seat component 11. The valve seat component 11 is formed by a stretching process. With such arrangement, compared with the case that the valve seat component 11 is formed as a whole by machining a metal block by cutting, or the connecting portion 112 and the valve seat portion 111 are separately formed by machining metal blocks from cutting, or multiple components are formed by machining by cutting and then fixedly connected together to form the valve seat component, it is beneficial to reducing the energy consumption and consumables for processing the valve seat component 11.

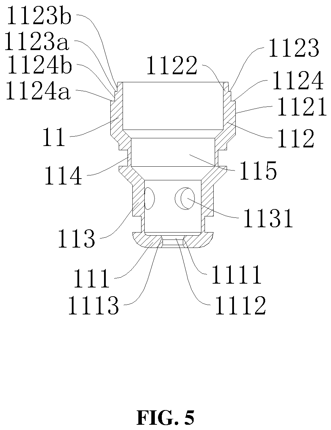

Referring to FIG. 2 and FIG. 5, in this embodiment, at least a part of the valve seat component 11 is located inside the valve chamber 21. The valve seat component 11 includes a valve seat portion 111, a connecting portion 112, a communication portion 113, and a transition part 114. The valve seat portion 111, the connecting portion 112, the communication portion 113, and the transition part 114 are formed into an integrated structure. The transition part 114 is located between the connecting portion 112 and the communication portion 113, and is connected to the connecting portion 112 and the communication portion 113, respectively. The connecting portion 112 is arranged closer to the rotor assembly 12 than the communication portion 113, and the valve seat portion 111 is located at a lower end of the communication portion 113. The communication portion 113 has a first passage 1131, and the electric valve 100 has a valve chamber 115. A wall forming the valve chamber 115 includes an inner peripheral wall of the valve seat component 11. The first passage 1131 extends through the communication portion 113 in the radial direction of the electric valve, and is in communication with the valve chamber 115. The valve chamber 115 is in communication with a space outside the communication portion 113 through the first passage 1131, that is, in communication with the valve chamber 21. The number of first passages 1131 may be set as required, and the first passages 1131 are distributed at a certain distance in the circumferential direction of the communication portion 113.

Referring to FIG. 2 and FIG. 5, in this embodiment, the valve seat portion 111 is located at the lower end of the communication portion 113, and the valve seat portion 111 extends inward relative to the communication portion 113, in other words, the valve seat portion 111 extends inward at an angle. In this embodiment, the valve seat portion 111 is arranged at an approximate right angle relative to the communication portion 113, but may also be tilted upward or downward, or bent for multiple times.

The valve port 1112 extends through the valve seat portion 111 in the axial direction of the electric valve, and the valve port portion 1111 is substantially located at a center of the valve seat portion 111. The valve core assembly 13 and the valve port portion 1111 are coaxially arranged. Herein, the expression "coaxially arranged" includes an approximately coaxial arrangement. In this embodiment, the valve port portion 1111 has a valve port fitting portion 1113, which may be machined after the main body of the valve seat component 11 is formed, or be pre-machined. The valve port fitting portion 1113 may be designed according to different flow curve requirements, for example, in arc shape, plane shape, or stepped shape. The valve core assembly 13 is configured to cooperate with the valve port fitting portion 1113 to adjust the flow area of the valve port 1112, thereby adjusting the flow rate of the valve port 1112.

Referring to FIG. 2 and FIG. 5, in this embodiment, the valve seat component 11 includes a connecting portion 112, which is provided with an external threaded portion 1121 located on an outer peripheral wall of the connecting portion 112. The electric valve 100 includes a valve body 2, and only the position of the external threaded portion 1121 is indicated in the drawings. The specific shape of the external threaded portion is not shown. The valve body 2 has a valve chamber 21, and at least a part of the valve seat component 11 is located inside the valve chamber 21. The valve body 2 has an internal threaded portion 22 that matches with the external threaded portion 1121, and the internal threaded portion 22 is provided on the inner peripheral wall forming the valve chamber 21. Only the position of the internal threaded portion 22 is indicated in the drawings, and the specific shape of the internal threaded portion is not shown. The valve seat component 11 is threadedly connected to the valve body 2, and the valve seat component 11 is threadedly connected to the valve body 2. With this detachable connection, it facilitates of mounting and removing the valve seat component 11 to and from the valve body 2. In other embodiments, the valve seat component 11 may also be mounted to the valve body 2 in other detachable manners, for example, by providing a ring-shaped component with an external threaded portion (not shown in the figures), where the ring-shaped component is threadedly connected to the valve body 2 and the valve seat component 11 is compressed between the ring-shaped component and the valve body 2, or by fixing the valve seat component 11 to the valve body by a threaded pin.

Referring to FIG. 2 to FIG. 5, in this embodiment, the sleeve 15 is fixedly connected to the connection part 112 of the valve seat component 11 and sealed with the connection part 112 by a welding face. In this embodiment, the sleeve 15 and the valve seat component 11 are fixed by laser welding, and may also be welded by brazing or other welding methods. The valve component 1 further includes a fitting portion 16, which is located above the external threaded portion 1121. The fitting portion 16 is provided with multiple fitting edges 161, which are distributed on the outer peripheral wall of the fitting portion 16. The fitting portion 16 is provided with a fitting hole, and at least a part of the valve seat component 11 and the sleeve 15 are located in the fitting hole. The fitting portion 16 and the valve seat component 11 are separately formed, and the fitting portion 16 is fixedly connected to the connecting portion 112 of the valve seat component 11. In the present application, "being separately formed" refers to the parts that are formed separately. The fitting portion 16 covers the joint between the sleeve 15 and the valve seat component 11. In this embodiment, the sleeve 15 abuts against the connection part 112 of the valve seat component 11 and is fixed to the connection part 112 by welding. The fitting portion 16 covers the welding joint between the sleeve 15 and the valve seat component 11, which is beneficial to reducing the height of the valve seat component 11, thereby reducing the overall height of the electric valve. The fitting portion 16 functions as an external-force-acting part for threadedly tightening the valve seat component 11 with the valve body 2. For example, the fitting portion 16 may be provided with six fitting edges 161, and a hex wrench or other tool may be used to act on the fitting portion 16 to tighten and fix the valve seat component 11 with the valve body 2. In this embodiment, the fitting portion 16 and the valve seat component 11 are welded by laser welding, and, in other embodiments, may also be welded by welding manners such as brazing. The fitting portion 16 and the valve seat component 11 are separately formed and then fixedly connected with each other, which is beneficial to reducing the energy consumption and consumables for processing compared with the case that the fitting portion 16 and the valve seat component 11 are formed by machining metal block as a whole by cutting.

Referring to FIG. 2 to FIG. 5, in this embodiment, the connecting portion 112 includes a first connecting portion 1122, which includes a first step portion 1123 and a second step portion 1124. The first step portion 1123 includes a first step portion bottom wall 1123a and a first step portion side wall 1123b, and the second step portion 1124 includes a second step portion bottom wall 1124a and a second step portion side wall 1124b. The lower end opening 152 of the sleeve 15 abuts against and is fixed by welding to the first step portion bottom wall 1123a, and the lower end surface of the fitting portion 16 abuts against and is fixed by welding to the second step portion bottom wall 1124a. In this embodiment, an inner diameter of the sleeve 15 is slightly less than the first step portion side wall 1123b, and the sleeve 15 is interference fitted to and then fixed by welding to the first step portion bottom wall 1123a. Of course, in other embodiments, the inner diameter of the sleeve 15 may also equals to or be slightly greater than the outer diameter of the first step side wall (1123b). In this embodiment, the outer diameter of the sleeve 15 equals to the outer diameter of the second step portion side wall 1124b, and the inner diameter of the fitting portion 16 equals to the outer diameter of the second step portion side wall 1124b. Herein, the expression "equaling to" includes "approximately equaling to". With such arrangement, it facilitates of positioning the fitting portion 16 and the connecting portion 112. In other embodiments, the inner diameter of the fitting portion 16 may also be greater than the outer diameter of the second step portion side wall 1124b. In this embodiment, a part of the lower end surface of the fitting portion 16 abuts against the second step portion bottom wall 1124a, and thus the fitting portion 16 is opposite to the lowest end of the connecting portion 112 in a limited assembly.

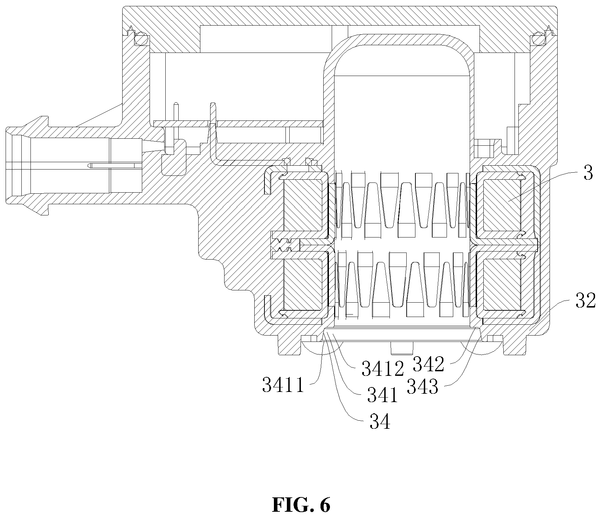

Referring to FIG. 2, FIG. 3, and FIG. 6, in this embodiment, the fitting portion 16 is fixedly connected to the connecting portion 112. The electric valve 100 further includes a first seal 41, and a top portion of the fitting portion 16 supports the first seal 41. The coil assembly 3 is provided with an accommodation groove portion 34. In this embodiment, the accommodation groove portion 34 is formed at the lower end of the injection molding portion 32, and the accommodation groove portion 34 has an accommodation groove 341. At least a part of the first seal 41 is located in the accommodation groove 341, and the first seal 41 is arranged in a compressed state. The first seal 41 is compressed between the fitting portion 16 and the top wall of the accommodation groove portion 34; or, the first seal 41 is compressed between the side wall of the accommodation groove portion 34 and the outer peripheral wall of the sleeve 15.

Referring to FIG. 2, FIG. 3, and FIG. 6, in an example of this embodiment, the fitting portion 16 and the connecting portion 112 are fixedly connected by welding, an annular weld seam is formed at the welding point, which is then sealed by the weld seam. The accommodation groove 341 has a first opening 3411 and a second opening 3412, the first opening 3411 is orientated towards the fitting portion 16 and the second opening 3412 is orientated towards the sleeve 15. The accommodation groove portion 34 includes a first top wall 342 and a first side wall 343, and the top wall of the accommodation groove portion 34 includes the first top wall 342 and the side wall of the accommodation groove portion 34 includes the first side wall 343. The first top wall 342 is arranged opposite to the fitting portion 16, and the first side wall 343 is arranged opposite to the fitting portion 16. The first seal 41 is in a compressed state. The seal 41 is compressed between the upper end surface of the fitting portion 16 and the first top wall 342; or the first seal 41 is compressed between the first side wall 343 and the outer peripheral wall of the sleeve 15. When the first seal 41 is compressed between the upper end surface of the fitting portion 16 and the first top wall 342, the provision of the first seal 41 is beneficial to reducing the amount of external gas or liquid entering into a gap between the coil assembly 3 and the sleeve 15 through a gap between the fitting portion 16 and the first top wall 342. In that case, the first seal 41 functions as a first sealed position. In addition, the fitting portion 16 and the valve seat component 11 are welded together by laser welding and the joint there between is circumferentially welded in a circle, and the formed circular weld seam functions as a second sealed position. These two seals cooperate with each other to prevent external gas or liquid from entering the gap between the coil assembly 3 and the sleeve 15 that affects the coil assembly 3 or the electric control components arranged at the top of the coil assembly 3. For example, it can prevent corrosive gas or liquid from corroding the claw poles of the coil assembly 3. In this embodiment, the first side wall 343 tilts outward at an angle from top to bottom. Of course, in other embodiments, the first side wall 343 may also be arranged substantially vertically. When being compressed between the first side wall 343 and the outer peripheral wall of the sleeve 15, the first seal 41 may be beneficial to reducing the amount of external gas or liquid entering into the gap between the coil assembly 3 and the sleeve 15 through the gap between the first side wall 343 and the sleeve 15. In that case, the first seal 41 functions as the first sealed position. In addition, the weld seam between the fitting portion 16 and the valve seat component 11 functions as the second sealed position, which can further prevent external gas or liquid from entering the gap between the coil assembly 3 and the sleeve 15 that affects the coil assembly 3 or the electric control components arranged at the top of the coil assembly 3, for example, prevent corrosive gas or liquid from corroding the claw poles of the coil assembly 3.

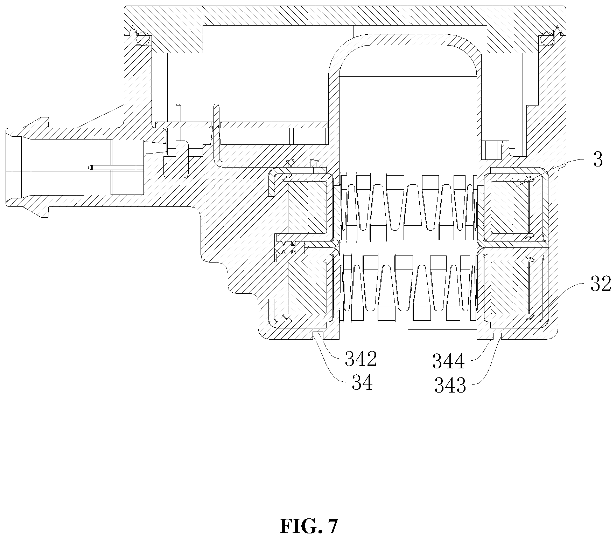

Referring to FIG. 2, FIG. 3, FIG. 6, and FIG. 7, in another example of this embodiment, the fitting portion 16 and the connecting portion 112 are fixedly connected by welding, an annular weld seam is formed at the welding point, which is then sealed by the weld seam. The accommodation groove 341 has a first opening 3411 orientated towards the fitting portion 16, and the accommodation groove portion 34 includes a first top wall 342, a first side wall 343, and a second side wall 344. The top wall of the accommodation groove portion 34 includes a first top wall 342, and the side wall of the accommodation groove portion 34 includes a first side wall 343 and a second side wall 344. The first top wall 342 is arranged opposite to the fitting portion 16, and the first side wall 343 is arranged opposite to the second side wall 344. The inner diameter of the first side wall 343 is greater than the inner diameter of the second side wall 344, the first seal 41 is in a compressed state, which is compressed between the upper end surface of the fitting portion 16 and the first top wall 342. The provision of the first seal 41 is beneficial of reducing the amount of external gas or liquid entering into the gap between the coil assembly 3 and the sleeve 15 through the gap between the fitting portion 16 and the first top wall 342. In that case, the first seal 41 functions as the first sealed position. In addition, the fitting portion 16 and the valve seat component 11 are welded together by laser welding and the joint there between is circumferentially welded in a circle, and the formed circular weld seam functions as the second sealed position. These two seals cooperate to prevent the external gas or liquid from entering the gap between the coil assembly 3 and the sleeve 15 that affect the coil assembly 3 or the electric control components arranged at the top of the coil assembly 3, for example, prevent corrosive gas or liquid from corroding the claw poles of the coil assembly 3.

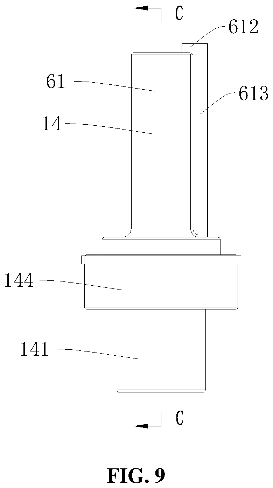

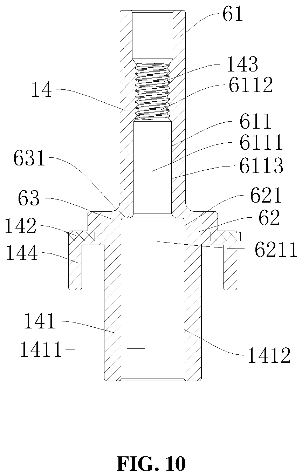

Referring to FIG. 2, FIG. 9, and FIG. 10, in this embodiment, the nut assembly 14 is fixedly connected to the connecting portion 112. At least a part of the nut assembly 14 is located inside the valve chamber 115, and at least a part of the valve core assembly 13 is located inside the valve chamber 115. The nut assembly 14 has a guide portion 141 that is hollow cylindrical. The guide portion 141 is provided with an accommodation chamber 1411, and the lower end of the guide portion 141 is open. An axis of the guide portion 141 coincides with the axis of the valve core assembly 13. The guide portion 141 includes a guide wall section 1412, which is located on the inner peripheral wall of the guide portion 141. At least a part of the valve core assembly 13 is located inside the accommodation chamber 1411, and at least a part of the valve core assembly 13 is slidably fitted with the guide wall section 1412. The guide wall section 1412 is used to guide the valve core assembly 13 and may also improve the coaxiality of valve core assembly 13.

Referring to FIG. 2, FIG. 9, and FIG. 10, in this embodiment, the nut assembly 14 further includes a support portion 14 that is substantially cylindrical. The outer wall of the support portion 144 abuts against or is in a clearance fitting with the inner wall of the connecting portion 112 to support the nut assembly 14 or to guide the nut assembly 14 for mounting.

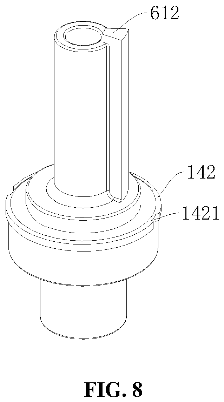

Referring to FIG. 2 to FIG. 5 and FIG. 10, in this embodiment, the inner diameter of the connecting portion 112 is greater than that of the transition part 114, and the inner diameter of the transition part 114 is greater than that of the communication portion 113. With such arrangement, it facilitates the installation of the valve seat component 11. The electric valve 100 further includes a second seal 42 and a third seal 43. The second seal 42 is located between the first passage 1131 and the connecting portion 112, and the third seal 43 is located between the first passage 1131 and the valve seat portion 111. The second seal 42 is compressed between the transition portion 114 and an inner peripheral wall forming the valve chamber 21, and the third seal 43 is compressed between the communication portion 113 and the inner peripheral wall forming the valve chamber 21. The valve body 2 includes a first flow passage 23 and a second flow passage 24. The first flow passage 23 may be directly in communication with the valve chamber 115 through the first passage 1131. When the valve port 1112 is open, the valve chamber 115 can be in communication with the second flow passage 24 through the valve port 1112. In this embodiment, the nut assembly 14 is fixedly connected to a metal connecting plate 14, and the nut assembly 14 is fixedly connected to the valve seat component 11 through the metal connecting plate 142. The metal connecting plate 142 has a balance hole 1421 (shown in FIG. 8), and the valve chamber 115 is in communication with a chamber where the rotor assembly 12 is located through the balance hole 1421, thereby balancing pressures in two chambers and reducing the valve opening pressure. In other embodiments, the balance hole may also be provided in a radial direction of the nut assembly. In this embodiment, the valve seat component is provided with grooves for accommodating the second seal 42 and the second seal 43, respectively. A manufacturing method for manufacturing the above-mentioned electric valve is further provided in this embodiment, which includes:
obtaining a base material for valve seat component 11;
forming a main body of valve seat component 11 by a stretching process; and
forming the valve port portion 1111 by a cutting process. The manufacturing method provided in this embodiment is beneficial to reducing the consumables and energy consumption of the valve seat component 11 for processing.

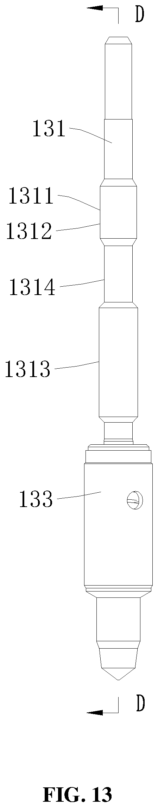

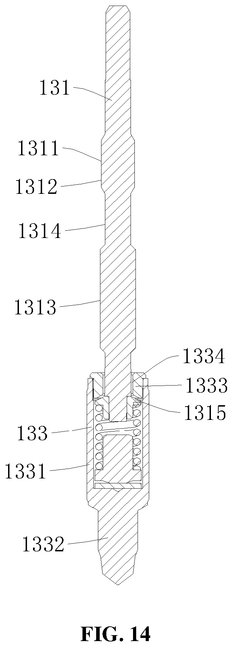

Referring to FIG. 2, FIG. 8 to FIG. 11, and FIG. 13 to FIG. 14, in the second embodiment of the electric valve 100, the electric valve includes a rotor assembly 12, a valve core assembly 13, and a nut assembly 14. The valve core assembly 13 is fixedly or limitedly connected to the rotor assembly 12, and the valve core assembly 13 includes a screw rod portion 131. The screw rod portion 131 is provided with a first external thread portion 1311, and only the position of the first external thread portion 1311 is indicated in the drawings. The specific shape of the first external thread is not shown. The nut assembly 14 is provided with a first internal thread portion 143 that matches with the first external thread portion 1311, and the first external thread portion 1311 can be engaged with the first internal thread portion 143 to form a threaded feed mechanism. The electric valve 100 further has a return elastic member 5, and a first end portion 51 of the return elastic member 5 can directly or indirectly abut against the nut assembly 14. The valve core assembly 13 includes a first stop portion 132, and a second end portion 52 of the return elastic member 5 can abut against the first stop portion 132. The first end portion 51 of the return elastic member 5 is arranged closer to the rotor assembly 12 than the second end portion 52 is. In the axial direction of the electric valve 100, the return elastic member 5 is positioned lower relative to the first internal thread portion 143, which is beneficial to simplifying the structure of the electric valve and reducing the number of components related to the stop structure.

In an example of this embodiment, during the upward movement of the screw rod portion 131, at least in the state that the first external thread portion 1311 is disengaged from the first internal thread portion 143, the return elastic member 5 is in a compressed state. With such arrangement, in the state that the first external thread portion 1311 is disengaged from the first internal thread portion 143, the return elastic member 5 exerts a downward force on the valve core assembly 13 to drive the first external thread portion 1311 to be engaged with the first internal thread portion 143 again, which is beneficial for the first external thread portion 1311 and the first internal thread portion 143 to form the threaded feed mechanism again when the rotor assembly 12 rotates in a direction closing the valve, so as to convert the rotation of the rotor assembly 12 into an axial linear motion of the screw rod portion 131 downward relative to the nut assembly 14. With such arrangement, it prevents the first external thread portion 1311 from not being engaged with the first internal thread portion 143 again after being disengaged from the first internal thread portion 143, which is beneficial to simplifying the structure of the electric valve and reducing the number of components related to the stop structure. The return elastic component 5 includes a spring, elastic plastics, or a structure having similar functions with the spring.

In another example of this embodiment, in the state that the first external thread portion 1311 is engaged with the first internal thread portion 143, the return elastic member 5 is in a compressed state, and the expression "being engaged with" includes being partially engaged, that is, a situation where the first external thread portion 1311 is partially engaged with the first internal thread portion 143. With such arrangement, the return elastic member 5 can provide a pre-tightening force to tightly press the first external thread portion 1311 against the first internal thread portion 143, thereby eliminating a thread clearance between the first external thread portion 1311 and the first internal thread portion 143 and ensuring a tight fit there between, which is beneficial to avoiding a shake of the screw rod portion 131 and reducing noise. The above two examples can be used in combination or separately.

Referring to FIG. 2, FIG. 8 to FIG. 11, and FIG. 13 to FIG. 14, in this embodiment, the nut assembly 14 includes a first portion 61 and a second portion 62. The first portion 61 is arranged higher than the second portion 62, and the first portion 61 is substantially hollow and cylindrical. The second portion 62 is substantially hollow and cylindrical. The first portion 61 has a first chamber portion 611, and the second portion 62 has a second chamber portion 621. An inner wall of the first portion 61 forms the first chamber portion 611, and an inner wall of the second portion 62 forms the second chamber portion 621. An inner diameter of the first chamber portion 611 is less than that of the second chamber portion 621. The first chamber portion 611 has a first chamber 6111, and the second chamber portion 621 has a second chamber 6211. The first chamber portion 6111 is in communication with the second chamber 6211.

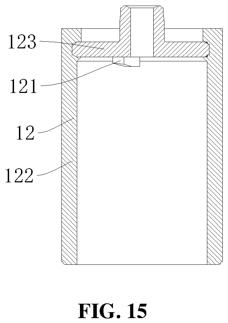

Referring to FIG. 2, FIG. 8 to FIG. 11, and FIG. 13 to FIG. 15, in this embodiment, the first portion 61 includes a first anti-rotation portion 612, which is located at the upper end of the first portion 61. The first anti-rotation portion 612 protrudes upward from the upper surface of the first portion 61. In this embodiment, a reinforcement portion 613 is further provided below the first anti-rotation portion 612, which increases the strength of the first anti-rotation portion 612. Of course, in other embodiments, the reinforcement portion 613 may not be provided. In this embodiment, the first anti-rotation portion 612 and the first portion 61 are integrally formed, which can facilitate of processing. In other embodiments, the first anti-rotation portion 612 and the first portion 61 may also be separately formed and then fixedly connected. The rotor assembly 12 has a second anti-rotation portion 121 and includes a magnetic rotor 122 and a connecting plate 123 that are fixedly connected through injection molding. The screw rod portion 131 is fixedly connected to the connecting plate 123. The fixing connection manner includes welding and riveting. The second anti-rotation portion 121 is formed on the connecting plate 123 and located at the lower end of the connecting plate 123. The second anti-rotation portion 121 protrudes downward from the lower surface of the connecting plate. The second anti-rotation portion 121 can abut against the first anti-rotation portion 612 to limit the lowest position of the rotor assembly 12, thereby avoiding a friction generated between the valve core assembly 13 and the valve port portion 1111 or the valve being over-closed in case of the valve port 1112 being closed by the valve core assembly 13. The abutting locations includes abutting on side surfaces and abutting on upper and lower surfaces. In this embodiment, the abutting manner is abutting on side surface, that is, circumferentially abutting. In this embodiment, the two surfaces that abut against each other are two substantially perpendicular surfaces. In this embodiment, the first anti-rotation portion 612 and/or the second anti-rotation portion 121 further have inclined surfaces, which are not the surfaces on which the first anti-rotation portion 612 and the second anti-rotation portion 121 abut against each other for limiting. For example, the inclined surface of the second anti-rotation portion 121 is located on a side opposite to the abutting surface for limiting. Setting the inclined surfaces can avoid generating an interference between the two anti-rotation portions during the upward rotation of the rotor when the valve is opened, where the interference between the two anti-rotation portions is generated by rotating one circle in the direction opening the valve, which may otherwise result in the valve being not open.

Referring to FIG. 2, FIG. 8 to FIG. 11, and FIG. 13 to FIG. 14, in this embodiment, the first chamber portion 611 includes an internal thread section 6112, and the first internal thread portion 143 is located inside the internal thread section 6112. The first chamber portion 611 further includes an internal guide section 6113, and the internal thread section 6112 is arranged closer to the connecting plate 123 than the internal guide section 6113. An inner diameter of the internal guide section 6113 is greater than that of the internal thread section 6112. The screw rod portion 131 includes an external thread section 1312 and an outer guide section 1313. The first external thread portion 1311 is located on the external thread section 1312, which is arranged closer to the connecting plate 123 than the outer guide section 1313. The outer guide section 1313 is slidably fitted with the internal guide section 6113, and the internal guide section 6113 is used to guide the screw rod portion 131. The screw rod portion 131 further includes a small diameter portion 1314, which is located between the external thread section 1312 and the outer guide section 1313. An outer diameter of the small diameter portion 1314 is less than that of the outer guide section 1313. The provision of the small diameter portion 1314 can facilitate the installation of the screw rod portion 131 on the nut assembly 14 from bottom to top, avoiding the interference.

Referring to figures, with such arrangement, it is beneficial to simplifying the anti-move structure of the electric valve, making the structure relatively simple and reducing the number of components of the electric valve.

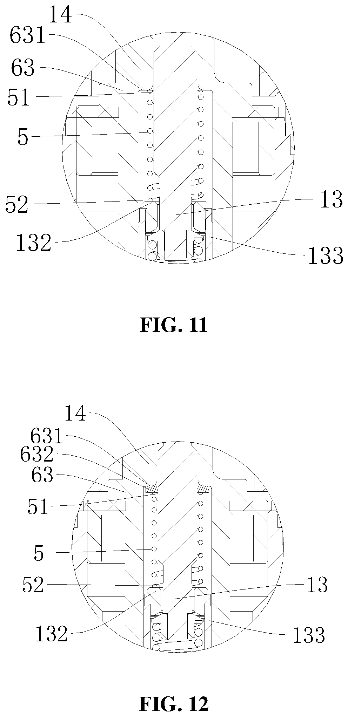

Referring to FIG. 11 in conjunction with FIG. 2 and FIG. 8 to FIG. 10, in one example of this embodiment, the nut assembly 14 includes an adapter portion 63, which connects the first portion 61 and the second portion 62. The adapter portion 63 has a first support surface 631, which is located above the second chamber 6211. The first end portion 51 of the return elastic member 5 abuts against the first support surface 631.

Referring to FIG. 12 in conjunction with FIG. 2 and FIG. 8 to FIG. 10, in another example of this embodiment, the electric valve may further include a support gasket 632. A lower end surface of the support gasket 632 abuts against the return elastic member 5, and an upper end surface of the support gasket 632 abuts against the first support surface 631. The provision of the support gasket 632 can reduce the difficulty of machining the nut assembly 14 and prevent the return elastic member 5 from tilting due to an uneven surface of the nut assembly 14 that matches with the first end portion 51 of the return elastic member 5.

Referring to FIG. 2, FIG. 8 to FIG. 11, and FIG. 13 to FIG. 14, in this embodiment, the valve core assembly 13 further includes a valve core portion 133, which is limitedly connected to the screw rod portion 131. A top portion of the valve core portion 133 is used as a first stop portion 132, and the second end portion 52 of the return elastic member 5 abuts against the top portion of the valve core portion 133.

Referring to FIG. 2. FIG. 8 to FIG. 11, FIG. 13 and FIG. 14, in this embodiment, the valve core portion 133 includes a valve core sleeve 1331, a valve needle part 1332, and a limiting block 1333. The limiting block 1333 has a first hole 1334 in which a part of the screw rod portion 131 is located. A part of the screw rod portion 131 extends into an inner chamber formed by the valve core sleeve 1331, and the limiting block 1333 is fixedly connected to the valve core sleeve 1331. The screw rod portion 131 has a flange portion 1315, and the flange portion 1315 and the screw rod portion 131 are fixedly connected or integrally formed. An outer diameter of the flange portion 1315 is greater than an inner diameter of the first hole 1334, and the flange portion 1315 abuts against a lower end surface of the limiting block 1333 to prevent the screw rod portion 131 from detaching from the valve core assembly 13. The limiting block 1333 has a top surface, and the second end portion 52 of the return elastic member 5 abuts against the top surface of the limiting block 1333. In this embodiment, the top portion of the limiting block 1333 is the first stop portion 132 of the screw rod portion 131. The top surface of the limiting block 1333 is flat, which can prevent the second end portion 52 of the return elastic member 5 from tilting. The return elastic member 5 is mounted outside the screw rod portion 131, and the inner diameter of the return elastic member 5 is substantially the same as the outer diameter of the outer guide section 1313 of the screw rod portion 131. The outer guide section 1313 can guide the return elastic member 5 and prevent the return elastic member 5 from tilting. In other embodiments, the valve core portion 133 and the screw rod portion 131 may be integrally formed, and the valve core portion 133 may be provided at the screw rod portion 131. With such arrangement, the research and development cost of electric valves can be reduced. In another example of this embodiment, an annular support plate (not shown in the figures) may be provided at the top of the valve core portion 133. A lower end surface of the support plate abuts against the top portion of the valve core portion 133, and the second end portion 52 of the return elastic member 5 abuts against an upper end surface of the support plate.

In another example of this embodiment, the first stop portion 132 includes a snap ring (not shown in the figures) and a gasket (not shown in the figures). The snap ring is clamped and secured to the screw rod portion 131, and the snap ring and the gasket are arranged lower than the return elastic member 5. The second end portion 52 of the return elastic member 5 abuts against the upper surface of the gasket, and the lower surface of the gasket abuts against the snap ring. At least in case that the first external thread portion 1311 is disengaged with the first internal thread portion 143, the return elastic member 5 is in a compressed state. Of course, in other embodiments, the gasket may be included in the stop portion (not shown in the figures) and is positioned lower than the return elastic member 5. The gasket is fixed to the screw rod portion 131 by welding, and the second end portion 52 of the return elastic member 5 abuts against the lower surface of the gasket. At least in case that the first external thread portion 1311 is disengaged with the first internal thread portion 143, the return elastic member 5 is in a compressed state.

The first external thread portion 1311 of the screw rod portion 131 is connected with the first internal thread portion 143 of the nut assembly 14. When the rotor assembly 12 is moved upward, the rotor assembly 12 is rotated to drive the screw rod portion 131 to rotate, which converts the rotation of the rotor assembly 12 into an axial upward movement of the screw rod portion 131 relative to the nut assembly 14 and thus drives the screw rod portion 131 to move upward. After the first external thread portion 1311 is disengaged with the first internal thread portion 143, the screw rod portion 131 stops moving upward. When the valve port 1112 is required to be closed, since the return elastic member 5 is in the compression state, the screw rod portion 131 is always subjected to a downward elastic force, and thus the first external thread portion 1311 and the first internal thread portion 143 can be driven to be engaged again to convert the rotation of the rotor assembly 12 into an axial downward movement of the screw rod portion 131 relative to the nut assembly 14. In this embodiment, this action can be achieved with a relatively simple structure.

It should be noted that the above embodiments are only used to illustrate the present application and not limit the technical solutions described in the present application. Although the present application has been described in detail in the specification with reference to the above embodiments, those skilled in the art should understand that modifications, combinations or equivalent replacements can be still made to the present application by those skilled in the art, and all technical solutions and improvements thereof without deviating from the spirit and scope of the present application shall fall within the scope of the claims of the present application.

## Claims

1. A valve device, comprising: a valve seat component (11) and a valve core assembly (13), wherein
the valve seat component (11) is made of material containing metal and formed by a stretching process, the valve seat component (11) comprises a connecting portion (112) and a valve seat portion (111) that are integrally formed, and the valve seat portion (111) comprises a valve port portion (1111) having a valve port (1112); and
the valve core assembly (13) comprises a valve core portion (133), which is movable relative to the valve port (1112) to adjust a flow area of the valve port (1112).

2. The valve device according to claim 1, wherein
the valve seat component (11) further comprises a communication portion (113) having a first passage (1131), and, the communication portion (113), the connecting portion (112), and the valve seat portion (111) are integrally formed;
the valve device further comprises a valve chamber (115), and a wall forming the valve chamber (115) comprises an inner peripheral wall of the valve seat component (11); and
the valve core portion (133) of the valve core assembly (13) is movable inside the valve chamber (115), and the first passage (1131) is in communication with the valve chamber (115).

3. The valve device according to claim 2, wherein
the valve seat portion (111) is located at a lower end of the communication portion (113), the valve seat portion (111) extends inward relative to the communication portion (113);
the valve port (1112) extends through the valve seat portion (111) in an axial direction of the valve device; and
the valve core assembly (13) and the valve port portion (1111) are coaxially arranged , the valve port portion (1111) has a valve port fitting portion (1113), and the valve core assembly (13) is configured to cooperate with the valve port fitting portion (1113) to adjust the flow area of the valve port (1112).

4. The valve device according to any one of claims 1 to 3, further comprising a valve body (2), wherein
the valve body (2) is provided with a valve chamber (21), at least a part of the valve seat component (11) is located inside the valve chamber (21); and
the valve body (2) has an internal threaded portion (22), which is provided on an inner peripheral wall of the valve chamber (21), wherein
the connecting portion (112) has an external threaded portion (1121) matching with the internal threaded portion (22), and the valve seat component (11) is threadedly connected to the valve body (2); or
the valve device further comprises a ring-shaped component with an external threaded portion matching with the internal threaded portion, the ring-shaped component is threadedly connected to the valve body (2) to compress the valve seat component (11) between the ring-shaped component and the valve body (2).

5. The valve device according to claim 4, further comprising a valve component (1), wherein the valve component (1) comprises:
the valve seat component (11);
the valve core assembly (13);
a sleeve (15) fixedly connected to the connecting portion (112); and
a fitting portion (16), wherein the fitting portion (16) and the valve seat component (11) are separately formed, and the fitting portion (16) is fixedly connected to the connecting portion (112), the fitting portion (16) covers a joint between the sleeve (15) and the valve seat component (11), and the fitting portion (16) is provided with a plurality of fitting edges (161) that are distributed on an outer peripheral wall of the fitting portion (16).

6. The valve device according to claim 5, further comprising a first seal (41) and a coil assembly (3), wherein
a top portion of the fitting portion (16) supports the first seal (41); and
the coil assembly (3) is provided with an accommodation groove portion (34), which has an accommodation groove (341), at least a part of the first seal (41) is located in the accommodation groove (341) in a compressed state, wherein
the first seal (41) is compressed between the fitting portion (16) and a top wall of the accommodation groove portion (34); or the first seal (41) is compressed between a side wall of the accommodation groove portion (34) and an outer peripheral wall of the sleeve (15).

7. The valve device according to claim 6, wherein
the fitting portion (16) and the connecting portion (112) are fixedly connected by welding, an annular weld seam is formed at a welding point between the fitting portion (16) and the connecting portion (112) to seal the welding point;
the accommodation groove (341) has a first opening (3411) and a second opening (3412), the first opening (3411) is orientated towards the fitting portion 16 and the second opening (3412) is orientated towards the sleeve (15);
the accommodation groove portion (34) comprises a first top wall (342) and a first side wall (343), the first top wall (342) is arranged opposite to the fitting portion (16), and the first side wall (343) is arranged opposite to the fitting portion (16); and
the first seal (41) is in a compressed state, wherein
the seal (41) is compressed between an upper end surface of the fitting portion (16) and the first top wall (342); or the first seal (41) is compressed between the first side wall (343) and the outer peripheral wall of the sleeve (15).

8. The valve device according to claim 6, wherein
the fitting portion (16) and the connecting portion (112) are fixedly connected by welding, an annular weld seam is formed at a welding point between the fitting portion (16) and the connecting portion (112) to seal the welding point;
the accommodation groove (341) has a first opening (3411) orientated towards the fitting portion (16);
the accommodation groove portion (34) comprises a first top wall (342), a first side wall (343), and a second side wall (344), the first top wall (342) is arranged opposite to the fitting portion (16), the first side wall (343) is arranged opposite to the second side wall (344), an inner diameter of the first side wall (343) is greater than an inner diameter of the second side wall (344); and
the first seal (41) is in a compressed state, and the seal (41) is compressed between an upper end surface of the fitting portion (16) and the first top wall (342).

9. The valve device according to claim 7 or 8, wherein
the connecting portion (112) comprises a first connecting portion (1122), which comprises a first step portion (1123) and a second step portion (1124), the first step portion (1123) comprises a first step portion bottom wall (1123a) and a first step portion side wall (1123b), and the second step portion (1124) comprises a second step portion bottom wall (1124a) and a second step portion side wall (1124b);
a lower end opening (152) of the sleeve (15) abuts against and is fixed by welding to the first step portion bottom wall (1123a), a lower end surface of the fitting portion (16) abuts against and is fixed to the second step portion bottom wall (1124a) by welding, an inner diameter of the sleeve (15) is less than or equals to an outer diameter of the first step portion side wall (1123b), an outer diameter of the sleeve (15) equals to an outer diameter of the second step portion side wall (1124b), and the inner diameter of the fitting portion (16) is greater than or equals to the outer diameter of the second step portion side wall (1124b).

10. The valve device according to any one of claims 5 to 8, wherein
the valve seat component (11) further comprises a nut assembly (14), which is fixedly connected to the connecting portion (112), at least a part of the nut assembly (14) and at least a part of the valve core assembly (13) are located inside the valve chamber (115);
the nut assembly (14) is provided with a guide portion (141) that is hollow and cylindrical and has an accommodation chamber (1411), a lower end of the guide portion (141) has an opening, and an axis of the guide portion (141) coincides with an axis of the valve core assembly (13); and
the guide portion (141) is provided with a guide wall section (1412), which is located on an inner peripheral wall of the guide portion (141), at least a part of the valve core assembly (13) is located inside the accommodation chamber (1411), and at least a part of the valve core assembly (13) is slidable on the guide wall section (1412).

11. The valve device according to claim 10, wherein
the nut assembly (14) further comprises a support portion (144) that is cylindrical, an outer wall of the support portion (144) abuts against or is in a clearance fitting with an inner wall of the connecting portion (112) to support the nut assembly (14) or to guide the nut assembly (14) for mounting.

12. The valve device according to claim 10, wherein
the valve seat component (11) further comprises a transition part (114), which is located between the connecting portion (112) and the communication portion (113), an inner diameter of the connecting portion (112) is greater than an inner diameter of the transition part (114), and the inner diameter of the transition part (114) is greater than an inner diameter of the communication portion (113); and
the valve device further comprises a second seal (42) and a third seal (43), the second seal (42) is located between the first passage (1131) and the connecting portion (112), and the third seal (43) is located between the first passage (1131) and the valve seat portion (111), the second seal (42) is compressed between the transition portion (114) and the inner peripheral wall forming the valve chamber (21), and the third seal (43) is compressed between the communication portion (113) and the inner peripheral wall forming the valve chamber (21).

13. A manufacturing method for manufacturing the valve device according to any one of claims 1 to 12, comprising:
obtaining a base material for valve seat component (11);
forming a main body of valve seat component (11) by a stretching process; and
forming the valve port portion (1111) by a cutting process.
